# DEMANDE DE BREVET EUROPEEN

(11) **EP 4 539 390 A1**
(43) Date de publication de la demande: **16.04.2025**
(21) Numéro de dépôt: 24206238.8
(22) Date de dépôt: 11.10.2024
(51) Int. Cl.: H04L 9/32

(54) **GENERATION CLE CRYPTOGRAPHIQUE A PARTIR D'UNE MEMOIRE SRAM**

(30) Priorité: 12.10.2023 FR 2310968
(71) Demandeur: Commissariat à l'Energie Atomique et aux Energies Alternatives, 75015 Paris (FR)
(72) Inventeur: RAMIREZ-CORRALES, Maria, 38054 GRENOBLE Cedex 09 (FR); NOEL, Jean-Philippe, 38054 GRENOBLE Cedex 09 (FR)
(74) Mandataire: Brevalex

(57) **Abrégé**

Procédé pour la génération d'une clé cryptographique à partir d'une mémoire SRAM et dispositif mettant en oeuvre un tel procédé, le procédé comprenant des étapes de :
- initialisation biaisée d'un premier ensemble de cellules situées dans une première région (12) de la mémoire SRAM de sorte à favoriser l'établissement dans un premier état logique, des cellules du premier ensemble,
- stocker, dans un deuxième ensemble de cellules d'une deuxième région (14) de la mémoire, les états respectifs des cellules du premier ensemble et résultant de la première initialisation biaisée, puis,
- effectuer une deuxième initialisation biaisée du premier ensemble de cellules de sorte à favoriser une mise dans un deuxième état logique, complémentaire du premier état logique, les cellules du premier ensemble, le procédé comprenant en outre, après la première initialisation biaisée et la deuxième initialisation biaisée (figure 2)

## Description

### DOMAINE TECHNIQUE

La présente demande concerne le domaine de la génération de clés cryptographiques à partir d'une mémoire.

Elle vise plus précisément un procédé amélioré de génération d'une clé cryptographique à partir d'une empreinte numérique résultant de l'initialisation d'une mémoire SRAM (« Static Random Access Memory », i.e. mémoire vive statique) ainsi qu'un dispositif utilisant un tel procédé.

### ÉTAT DE LA TECHNIQUE ANTÉRIEURE

Il est connu d'utiliser une mémoire SRAM comme une fonction physique non-clonable ou PUF (pour « Physical Unclonable Function ») afin de fournir une empreinte numérique non directement accessible et qui sert d'identifiant unique. Une clé cryptographique peut être alors constituée à partir de cette empreinte numérique.

Une technique connue pour générer une telle empreinte numérique susceptible de servir de clé cryptographique à partir d'une SRAM comporte notamment une phase dite d'enrôlement (« enrollment » selon la terminologie anglo-saxonne) consistant à réaliser une succession répétée d'initialisations de la mémoire SRAM pour pouvoir sélectionner des cellules mémoires, autrement dit des bits, dit(e)s « fortement biaisé(e)s ».

Il existe un nombre réduit de techniques d'initialisation d'une mémoire SRAM. La technique la plus connue d'initialisation est une initialisation dite « libre », qui consiste dans l'allumage sans contraintes d'un plan de cellules de mémoire. Avec une initialisation libre, l'état dans lequel chaque cellule est initialisée est établi librement. En particulier, lors d'un allumage sans contraintes d'une k^{ème} puce parmi un très grand nombre Nₚ ^{~} 10 000 de puces produites, la cellule de l'i^{ème} colonne et de la j^{ème} ligne a une probabilité pᵢⱼₖ de s'initialiser à un niveau logique '1' et une probabilité 1-pᵢⱼₖ de s'initialiser à un niveau logique '0'. Sur un grand nombre ~ 100 d'initialisations sans contrainte, la moyenne des valeurs d'initialisation de la cellule de la i^{ème} colonne et de la j^{ème} ligne dans un plan mémoire de la k^{ème} puce tendra vers cette valeur de probabilité pᵢⱼₖ. Il se trouve que cette valeur de probabilité change d'une cellule à l'autre et entre une puce et l'autre, d'une manière que sur un ensemble des cellules de puces différentes on aura une statistique de p qui dépend notamment de la variabilité locale de son procédé de fabrication et plus globalement de conditions PVT (« Process », « Voltage », « Température », i.e. procédé, tension, température) autrement dit des variations locales et globales du procédé de fabrication, de la vitesse de balayage *V_{SR}* (« slew-rate » selon la terminologie anglo-saxonne exprimé en Volt/seconds) du niveau de tension d'alimentation utilisés, et de la température de fonctionnement.

Pour un k fixé, des bits fortement biaisés correspondent aux cellules avec une forte probabilité de commuter et de s'initialiser à un niveau logique donné (pᵢⱼₖ égal ou très proche de 1 pour les cellules à forte tendance de s'initialiser à '1' ; et pᵢⱼₖ égal ou très proche de 0 pour les cellules à forte tendance de s'initialiser à '0').

L'initialisation d'une mémoire peut prendre plusieurs cycles (100-100000 en fonction de la fréquence du système) et une phase d'enrôlement peut contenir plusieurs allumages de mémoire, typiquement plusieurs dizaines pour permettre de s'assurer d'une invariabilité suffisante de valeur de potentiel d'initialisation correspondant à un niveau logique '1' ou '0' et permettre ainsi d'identifier une cellule, autrement dit un bit fortement biaisé (HBB pour « Highly Biased Bit »).

La phase d'enrôlement peut ainsi s'avérer très longue à mettre en oeuvre et l'on peut vouloir ne la réaliser qu'un nombre limité de fois et avantageusement une seule fois.

Par ailleurs, le résultat de la phase d'enrôlement est typiquement stocké dans une mémoire non volatile NVM (pour « Non Volatile Memory » en anglais) dont la sécurisation peut s'avérer insuffisante.

En outre, les techniques d'enrôlement connues nécessitent parfois l'utilisation d'un code de correction d'erreurs (ECC pour « Error correction code ») pour récupérer le résultat de la phase d'enrôlement stocké dans la mémoire NVM et d'extraire les bits HBB à chaque fois qu'une clé cryptographique basée sur la SRAM PUF est générée. Cette manière de faire, réduit le nombre de cycles nécessaires pour créer une clé, mais le nombre de cycles absolu peut rester encore important étant donné que le décodage du code ECC doit typiquement être effectué à chaque demande de génération de clé.

L'utilisation d'une mémoire non volatile NVM et d'un code ECC ont par ailleurs pour inconvénient de nécessiter un besoin d'espace mémoire important.

Il se pose le problème de trouver un nouveau procédé pour générer une clé cryptographique à partir d'une mémoire de type SRAM, qui soit amélioré et en particulier vis-à-vis de l'un au moins des inconvénients énoncés ci-dessus.

### EXPOSÉ DE L'INVENTION

C'est par conséquent un but de la présente invention d'offrir, un procédé pour la génération d'une clé cryptographique à partir d'une mémoire SRAM, comprenant des étapes consistant à :
- effectuer une première initialisation biaisée d'un premier ensemble de cellules situées dans au moins une première région de la mémoire SRAM, de sorte à favoriser l'établissement dans un premier état logique, des cellules dudit premier ensemble,
- stocker, dans un deuxième ensemble de cellules d'une deuxième région de la mémoire, les états respectifs des cellules dudit premier ensemble et résultant de la première initialisation biaisée, puis,
- effectuer une deuxième initialisation biaisée dudit premier ensemble de cellules de sorte à favoriser une mise dans un deuxième état logique, complémentaire dudit premier état logique, les cellules dudit premier ensemble,
le procédé comprenant en outre, après la première initialisation biaisée et la deuxième initialisation biaisée :
- établir, à partir d'une ou plusieurs positions données identifiées dans la deuxième région respectivement d'une ou plusieurs cellules « hautement biaisées au deuxième état » qui appartiennent audit deuxième ensemble et se trouvent dans le deuxième état logique consécutivement à la première initialisation biaisée, et à partir d'une ou plusieurs autres positions identifiées dans la première région respectivement d'une ou plusieurs cellules « hautement biaisées au premier état » qui appartiennent audit premier ensemble et qui se trouvent dans ledit premier état logique consécutivement à la deuxième initialisation biaisée : une clé numérique de N-bits, la clé numérique étant destinée à former la clé cryptographique ou formant un mot numérique à partir duquel la clef d'encryptage est destinée à être formée.

La première région est typiquement une région dite de « PUF » autrement dit dédiée notamment à l'implémentation d'une fonction physique non-clonable. La deuxième région peut être quant à elle une région dite de « post-traitement ».

Avec un tel procédé, on peut, avec un nombre limité d'étapes d'initialisation, ici des initialisations particulières et « biaisées », mettre rapidement en évidence des cellules (autrement dit de bits) fortement biaisé(e)s à '1' et des cellules ou bits fortement biaisé(e)s à '0' et utiliser les positions respectives de ces cellules ou bits pour former une clé numérique susceptible de former une clé cryptographique ou clé d'encryptage.

Avec un tel procédé, on utilise également un espace mémoire limité dans la mesure où il n'est pas nécessaire de dupliquer un nombre de fois important les états respectifs de cellules mémoires.

Un tel procédé permet ainsi de remplacer la phase d'enrôlement conventionnelle par une phase plus rapide et moins consommatrice en ressources.

Un tel procédé a également pour particularité de ne pas requérir nécessairement une mémoire non volatile et l'utilisation de codes de corrections d'erreur.

Il permet également des améliorations en matière de sécurisation, la quantité de données sensibles mises en oeuvre au cours de l'élaboration de la clé numérique étant réduite.

En cas d'une éventuelle attaque, ces deux régions de la mémoire peuvent être avantageusement effacées en un seul coup d'horloge, par exemple par un procédé dit « d'effacement rapide ».

Avantageusement, la première région est accessible uniquement en lecture. Cela peut permettre d'éviter une dérive de comportement en termes d'initialisation de première région au cours de sa vie utile.

Avantageusement, la deuxième région est accessible en lecture et en écriture.

La première région peut être formée de m lignes de cellules mémoire, tandis que la deuxième région est formée de m ou de m+k (avec m et k des entiers non-nuls) lignes de cellules mémoire.

Lorsque la première région est formée de m lignes, elle peut être associée à k lignes complémentaires formées de registres système distincts de la mémoire.

Selon un mode de réalisation particulier, l'établissement de la clé numérique comprend des étapes de :
- recherche dans une i^{ème} ligne de la deuxième région d'au moins une cellule hautement biaisée au deuxième état et lorsqu'une cellule hautement biaisée au deuxième état appelée « première cellule » est détectée, identification de la position, « première position », de la première cellule détectée,
- recherche dans une i^{ème} ligne de la première région d'au moins une cellule hautement biaisée au premier état et lorsqu'une cellule hautement biaisée au deuxième état appelée « deuxième cellule » est détectée, identification de la position, « deuxième position », de la deuxième cellule détectée, le procédé comprenant en outre,
- après identification de la première position de la première cellule : modification d'un bit donné situé à un premier emplacement de la clé numérique, en particulier en mettant ledit bit donné dans le deuxième état, ledit premier emplacement de la clé numérique étant sélectionné en fonction de la première position (p1_HBB) identifiée,
   et/ou,
- après identification de la deuxième position : modification d'un autre bit situé à un deuxième emplacement de la clé numérique, en particulier en mettant ledit autre bit dans le premier état, ledit deuxième emplacement de la clé numérique étant sélectionné en fonction de la deuxième position identifiée.

On effectue ainsi de préférence un traitement ligne par ligne sur un nombre réduit de régions de la mémoire SRAM pour aboutir à la constitution de la clé.

Avantageusement, la première position identifiée correspond au k^{ème} rang de la i^{ème} ligne et la clé numérique peut être formée dans au moins une ligne « auxiliaire de post-traitement » de la mémoire SRAM ou dans un registre du système évoqué précédemment. Le premier emplacement peut être alors déterminé dans la ligne auxiliaire de post-traitement en fonction de k, et en particulier peut correspondre au k^{ème} rang de la ligne ou registre auxiliaire de post-traitement.

Selon un mode de réalisation avantageux, le procédé peut comprendre en outre :
- après recherche et identification de la première position et avant modification dudit bit donné : une étape de vérification par rapport à un premier seuil déterminé d'une proportion de bits au premier état dans la clé numérique,
   et/ou,
- après recherche et identification de la deuxième position et avant modification dudit autre bit : une étape de vérification par rapport à un deuxième seuil déterminé d'une proportion de bits au deuxième état dans la clé numérique.

De telles vérifications peuvent contrôler le nombre de '0' et de '1' dans la clé numérique et ainsi l'ajuster en fonction de l'application.

La clé numérique peut être avantageusement formée à partir d'une ligne auxiliaire de post-traitement de la mémoire SRAM ou bien d'un registre mémoire d'un système auquel appartient ladite mémoire, avec la propriété d'effacement décrit auparavant. Cette mémoire peut être également dotée d'une ou plusieurs lignes auxiliaires de post-traitement supplémentaires, et notamment une ou plusieurs lignes pour répertorier, à chaque modification d'un bit de la clé numérique, un emplacement correspondant de ce bit modifié dans la clé numérique. Si la mémoire n'inclus pas ces k lignes auxiliaires, il est possible de réaliser ces opérations dans des registres du système auquel appartient la mémoire.

Selon un mode de réalisation, la clé numérique en cours d'élaboration est enregistrée à une première adresse mémoire ou un premier registre du système. La clé numérique en cours d'élaboration est dupliquée sous forme d'une deuxième clé numérique à une seconde adresse mémoire ou un deuxième registre du système.

Une clé peut être enregistrée à une adresse mémoire et dupliquée dans un registre ou inversement une clé est enregistrée dans un registre et dupliquée à une adresse mémoire.

Une modification d'un bit de la clé numérique peut être alors dans ce cas effectué simultanément dans la deuxième clé numérique et le procédé peut comprendre en outre des étapes consistant à :
- vérifier l'identité de la clé numérique et de la deuxième clé numérique et, lorsque la clé numérique et la deuxième clé numérique sont différentes,
- effacer le contenu de la première région et de la deuxième région.

Un mécanisme d'effacement dit « rapide » peut être en particulier utilisé. On apporte ainsi un niveau de sécurisation supplémentaire en cas d'éventuelle intrusion.

Selon un autre mode de réalisation particulier, lorsque l'établissement de la clé numérique de N-bits est effectué par traitement ligne par ligne et lorsque l'ensemble des lignes de la première région a déjà été traité sans que tous les N-bits de la clé numérique n'aient été mis à jour ou constitués, le procédé peut comprendre en outre, lors dudit établissement de la clé numérique de N-bits, des étapes supplémentaires consistant :
- effectuer une troisième initialisation biaisée, d'un troisième ensemble de cellules d'une troisième région, en particulier dédiée au PUF, de la mémoire SRAM ou appartenant à une autre mémoire SRAM de sorte à favoriser l'établissement dans un premier état logique, les cellules dudit troisième ensemble,
- stocker les états respectifs des cellules dudit troisième ensemble et résultant de la troisième initialisation biaisée, puis,
- effectuer une initialisation biaisée dudit troisième ensemble de la troisième région de sorte à favoriser une mise dans un deuxième état logique, complémentaire dudit premier état logique, les cellules dudit troisième ensemble.

On peut alors, compléter la clé numérique à partir des positions d'une ou plusieurs cellules « hautement biaisées au deuxième état » qui appartiennent audit troisième ensemble et se trouvent dans le deuxième état logique consécutivement à la troisième initialisation biaisée, et à partir des positions d'une ou plusieurs cellules « hautement biaisées au premier état » qui appartiennent audit troisième ensemble et se trouvent dans ledit premier état logique consécutivement à la quatrième initialisation biaisée.

Alternativement, la clé numérique peut être constituée de N-bits dont les valeurs respectives dépendent chacune d'une position identifiée parmi les positions données et les autres positions identifiées de cellules hautement biaisées au premier état consécutivement à la deuxième initialisation biaisée et de cellules hautement biaisées au premier état consécutivement à la deuxième initialisation biaisée.

Selon une possibilité de mise en oeuvre du procédé, la clé numérique est établie dans une sous-région « auxiliaire » de la mémoire SRAM ou dans un registre système et le procédé peut comprendre en outre, préalablement à la première initialisation biaisée et à la deuxième initialisation biaisée, une étape d'initialisation de la sous-région « auxiliaire » ou du registre, de sorte à établir les cellules mémoire de la sous-région « auxiliaire » ou les bits du registre tous à un même état logique donné, en particulier un état logique '0'.

Selon une mise en oeuvre particulière du procédé, celui-ci peut comprendre en outre, préalablement à la première initialisation biaisée, une étape de paramétrage de moyens de commande d'initialisation de la mémoire SRAM, de sorte à ajuster la probabilité donnée des cellules de la première région de s'établir dans un premier état logique consécutivement à la première initialisation biaisée.

Cette probabilité donnée peut être avantageusement modulée en fonction d'une durée d'impulsion sur au moins une ligne de mot couplée à des transistors d'accès des cellules dudit premier ensemble de cellules et appliquée lors de la première initialisation biaisée.

Selon un autre aspect, la présente invention prévoit un procédé de commande d'une mémoire SRAM comprenant des étapes de :
- mise sous tension de la mémoire SRAM ;
- mise en oeuvre d'un procédé pour générer une clé cryptographique tel que défini plus haut,
et, entre la mise sous tension et la mise en oeuvre du procédé pour générer une clé cryptographique ou bien, après la mise en oeuvre dudit procédé pour générer une clé cryptographique :
- mettre les cellules de la première région et de la deuxième région dans un état indéterminé dit « métastable » pour lequel leur premier noeud de stockage et leur deuxième noeud de stockage respectifs soient mis à des potentiels égaux ou sensiblement égaux.

On peut ainsi prévoir d'appliquer un processus antivieillissement ou contre l'effet de NBTI aux régions de la mémoire servant à élaborer la clé.

Selon un autre aspect, la présente invention concerne un dispositif comprenant :
- une mémoire SRAM,
- des moyens de commande de la mémoire SRAM dotés d'au moins un processeur, ou d'un circuit numérique ou d'au moins une unité de traitement informatique, configurés pour mettre en oeuvre un procédé tel que défini plus haut.

Selon une mise en oeuvre particulière, le dispositif peut être pourvu également d'un banc de registres pour les calculs auxiliaires.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
Figure 1 sert à illustrer un exemple d'agencement d'une zone mémoire SRAM à partir de laquelle un procédé pour générer une clé cryptographique et tel que mis en oeuvre suivant l'invention peut être réalisé ;
Figure 2 sert à illustrer un exemple d'enchainement d'étapes de procédé pour générer une clé cryptographique à partir de cellules fortement biaisées à '1' et de de cellules fortement biaisées à '0' d'une zone mémoire SRAM ;
Figure 3 sert à illustrer un exemple de méthode pour moduler une probabilité d'initialisation à '1' ou à '0' de cellules mémoires d'une région de mémoire SRAM et pouvoir réaliser une initialisation biaisée des cellules de la mémoire favorisant un état logique d'initialisation donné ;
Figure 4 sert à illustrer une recherche de bits fortement biaisés à '0' et de bits fortement biaisés à '1' respectivement dans une première région, en particulier dédiée au PUF, d'une mémoire SRAM ayant été l'objet au préalable d'une initialisation biaisée à '1' et dans une deuxième région, en particulier de post-traitement, d'une mémoire SRAM contenant des cellules dont l'état résulte d'une initialisation biaisée à '0' ;
Figure 5 sert à illustrer une modification d'une ligne mémoire particulière ou d'un registre du système, destinée à former une clé numérique en fonction du positionnement de bits fortement biaisés identifiés dans la première région ou dans la deuxième région ;
Figure 6 sert à illustrer une variante de procédé dans laquelle on duplique une clé numérique en cours d'élaboration afin de vérifier son intégrité au cours de cette élaboration ;
Figure 7 sert à illustrer une variante de procédé dans laquelle on ajuste la proportion de '1' ou de '0' dans une clé numérique élaborée à partir d'une région ladite PUF d'une mémoire SRAM ;
Figure 8 sert à illustrer une variante de procédé dans laquelle, lorsque la région de PUF servant à constituer une clé numérique ne contient pas assez de bits fortement biaisés, on sélectionne une autre région mémoire dans laquelle on effectue une succession d'initialisations biaisées à '0' et d'initialisations biaisées à '1'.
Figure 9 sert à illustrer une région mémoire supplémentaire destinée à former une région de PUF et utilisée en cas éventuel d'une insuffisance de bits fortement biaisés dans la région de PUF principale ;
Figure 10 sert à illustrer une mise dans un état particulier dit « métastable » des bits d'une mémoire ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

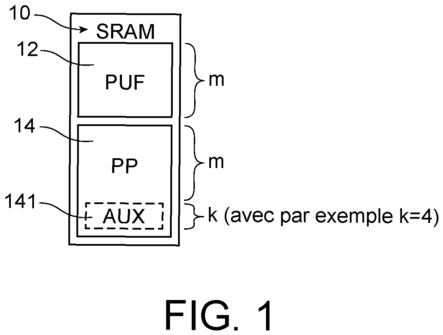

Un exemple de méthode selon la présente invention pour permettre de générer une clé cryptographique utilise une mémoire SRAM dotée typiquement d'une zone 10 de mémoire divisée en au moins deux régions comme illustrées de manière schématique sur la figure 1.

Une première région 12 de la zone 10 est dotée ici de m lignes (autrement dit de m rangées horizontales, avec m un entier non nul), de cellules mémoires. Cette première région 12 dite de « PUF » est de préférence rendue accessible uniquement en lecture et contient une fonction physique non clonable.

Une deuxième région 14 de la zone 10 dite de post-traitement (« Post Processing » en anglais, PP), rendue accessible à la fois en lecture et écriture, est ici prévue avec une taille et un nombre de lignes m+k (avec k un entier non nul) supérieurs à ceux de la première région 12 dans la mesure où, lors du procédé mis en oeuvre pour permettre de générer la clé cryptographique, la deuxième région 14 est destinée à stocker une copie de l'états respectifs de cellules mémoires de la première région 12. La deuxième région 14 n'est pas exclusivement dédiée à la génération d'une clé cryptographique et peut, hors du traitement ici décrit pour générer une telle clé, être employée pour la mise en oeuvre d'autres calculs sécurisés.

Typiquement, la deuxième région 14 est prévue légèrement plus grande que la première région 12, avec un nombre de k lignes supplémentaires compris par exemple entre 4 et 6. Les k lignes supplémentaires de la deuxième région 14 peuvent former une sous-région 141 dite « auxiliaire » dédiée à la mise en oeuvre de calculs lors de l'établissement de la clé cryptographique.

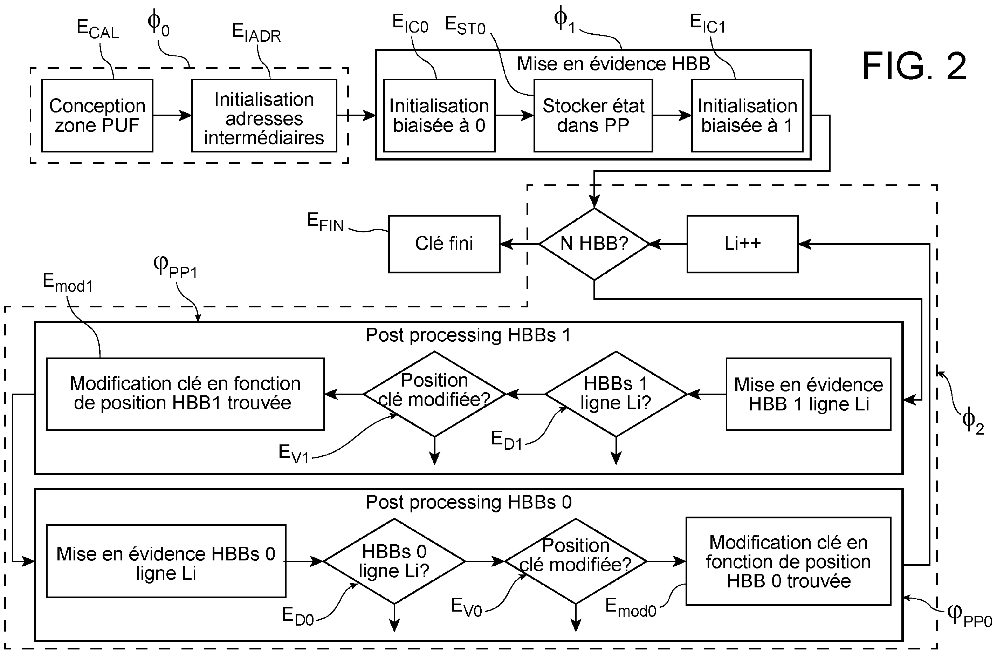

L'organigramme de la figure 2 donne de manière schématique une succession possible de phases et d'étapes mises en oeuvre pour pouvoir aboutir à l'obtention (étape finale E_{FIN}) d'une clé numérique par exemple sous forme d'un mot de N bits destinée à former la clé cryptographique ou à partir de laquelle la clé cryptographique est susceptible d'être formée.

La génération de la clé cryptographique a ici pour particularité de comporter une phase Φ₁ dite « de mise en évidence des bits fortement biaisés HBB » (HBB pour « Highly Biased Bits »). Cette phase Φ₁ comporte ici un nombre d'étapes de traitement réduit et en particulier un nombre réduit d'initialisations.

Lors de cette phase Φ₁, on effectue tout d'abord une première étape d'initialisation E_{IC0} particulière et dite « biaisée » des cellules appartenant à la première région 12 de la zone 10 de mémoire SRAM. Cette première initialisation biaisée est ici effectuée de sorte à favoriser la mise dans un premier état logique donné, des cellules de la première région 12.

Par « favoriser » on entend ici que l'on agit, par le biais de moyens de commande de la mémoire SRAM, sur la probabilité de chaque cellule, de s'établir à un état logique donné plutôt qu'à un état logique complémentaire consécutivement à une initialisation et ce, sans pour autant imposer cet état logique donné et mettre ainsi toutes les cellules à cet état logique donné lors de cette initialisation. De tels moyens de commande permettent d'ajuster la probabilité d'établissement des cellules à un état donné des cellules afin que leur probabilité d'initialisation à cet état donné, par exemple '0', soit plus importante qu'à un état logique complémentaire, par exemple '1', de cet état donné.

Lorsqu'on met en oeuvre une initialisation biaisée, on fait en sorte qu'une grande majorité des cellules initialisées s'établissent à un état logique donné. Pour autant, certaines cellules s'établissent à l'état logique complémentaire de l'état logique donné malgré le biais d'initialisation introduit. Ces cellules sont ici appelées « fortement biaisées ».

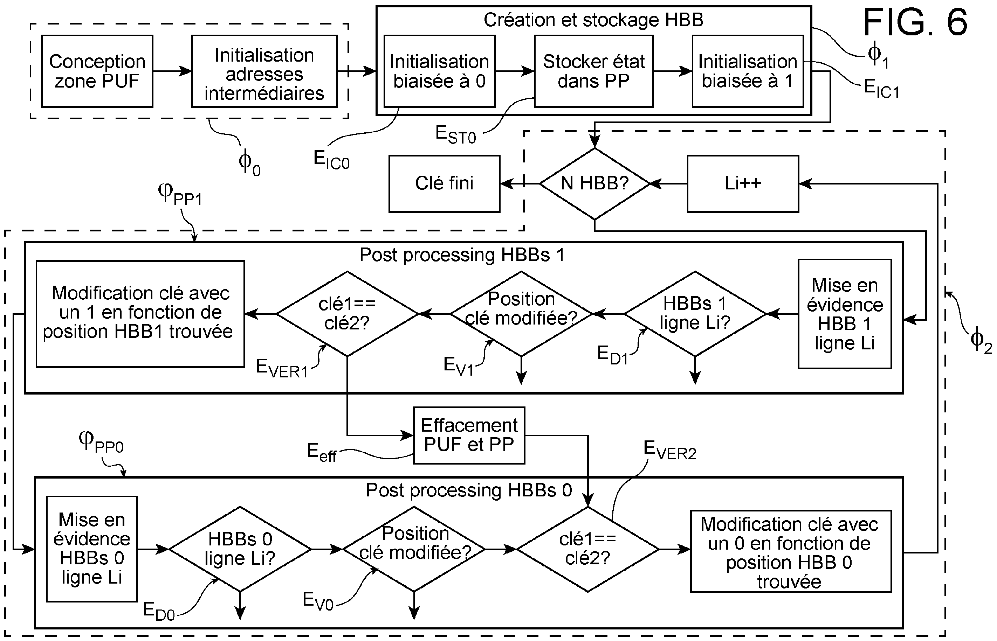

Des exemples de moyens de commande permettant de mettre en oeuvre une initialisation biaisée de cellules mémoire SRAM sont donnés dans la demande FR 3128570 A1 issue de la demanderesse. Un circuit permettant de réaliser une initialisation biaisée est décrit dans cette demande FR 3128570 A1 notamment en lien avec la figure 6 de cette demande FR 3128570 A1. Pour contrôler la statistique d'initialisation et moduler la probabilité d'établissement des cellules à un état logique donné on agit ici en particulier sur leur polarisation lors de l'initialisation et notamment des valeurs de tension appliquées sur les lignes de bits.

Pour permettre de biaiser l'état d'initialisation d'une cellule mémoire donnée, un autre exemple de moyen de commande est basé sur le réglage d'un temps d'écriture, en particulier en modulant la durée Tₚᵤₗₛₑ d'une impulsion appliquée pour activer une ligne de mot WL associée à une rangée de cellules à laquelle cette cellule mémoire donnée appartient.

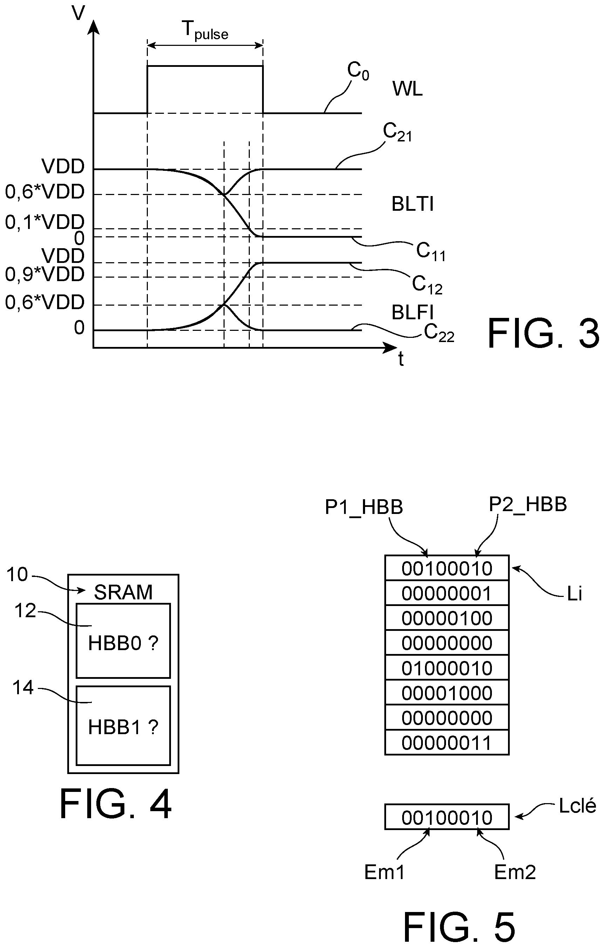

Comme cela est illustré de manière schématique sur la figure 3, si l'on souhaite réaliser une écriture à un état logique donné dans une cellule, par exemple à '0' et lui imposer dans ce cas un état logique '0', on laisse alors une durée d'impulsion Tₚᵤₗₛₑ suffisante et supérieure à un premier seuil pour que les lignes de bits BLTi, BLFi puissent s'établir à des niveaux respectifs prédéterminés, par exemple de 0.9 VDD pour une première ligne de bit et de 0.1 VDD pour la ligne de bits BLFi complémentaire.

Dans le cas qui nous intéresse, on souhaite réaliser une initialisation biaisée (favoriser un état logique '0' avec une probabilité donnée plutôt que de l'imposer). Or, lorsque la durée d'impulsion Tₚᵤₗₛₑ est suffisante et supérieur à un deuxième seuil mais inférieure au premier seuil, cette cellule peut être initialisée soit à un état logique '0' soit à un état '1', avec tout de même une probabilité de s'établir à l'état '0' plus importante que celle de s'établir à l'état '1' et typiquement comprise entre 95 et 99% et avantageusement entre 98 et 99%.

Dans un tel cas, si consécutivement à une initialisation biaisée à 0, l'état logique imposée sur la cellule est bien '0', cela veut dire que la cellule ne correspond pas à une cellule fortement biaisée. Elle suit ainsi l'inertie des impulsions d'entrée (courbes C₁₁ et C₁₂) imposée sur la première ligne de bit BLTi et seconde ligne de bit BLFi.

En revanche, si consécutivement à une initialisation biaisée à 0, l'état logique de la cellule bascule tout de même à un état logique '1' (courbes C₂₁ et C₂₂) malgré la plus forte probabilité de basculer à 0, la cellule (et son bit correspondant) est alors identifiable comme fortement biaisée à 1.

Selon une possibilité de réalisation, comme illustré sur la figure 2, la première étape d'initialisation biaisée des cellules de la première région 12 peut être par exemple une initialisation biaisée à '0' (étape E_{IC0}), autrement dit effectuée de sorte à favoriser une mise dans un état logique '0' des cellules de la première région 12.

On stocke ensuite (étape E_{STO}), l'état respectif des cellules de la première région 12 résultant de la première initialisation biaisée, dans la deuxième région 14 de la zone 10 de mémoire SRAM. Les états respectifs des cellules de la première région 12 sont ainsi dupliqués dans la deuxième région 14.

Puis (étape E_{IC1}), on effectue une deuxième initialisation biaisée, cette fois au deuxième état des (mêmes) cellules de la première région 12 de la mémoire. On favorise alors ainsi l'établissement dans un deuxième état complémentaire du premier état les cellules de la première région 12.

Ainsi, si l'on suit l'exemple illustré sur la figure 2, où l'on a préalablement effectué une première initialisation biaisée à '0' des cellules de la première région 12, la deuxième initialisation biaisée est cette fois une initialisation biaisée à '1' (étape E_{IC1}). Autrement dit, on effectue une initialisation de ces cellules de la première région 12 de sorte à favoriser une mise à un état logique '1' des cellules de la première région 12.

A l'issue de ces étapes E_{ICO} et E_{IC1} on dispose dans la zone de mémoire 10 dans la première région 12, d'un ensemble de cellules dont l'état résulte de la deuxième initialisation biaisée (étape E_{IC1}), ici une initialisation biaisée à '1', et dans la deuxième région 14, d'un ensemble de cellules dont l'état résulte de la première initialisation biaisée (étape E_{IC0}), ici une initialisation biaisée à '0'.

On a ainsi mis en évidence dans la première région 12, des cellules (autrement dit des bits) fortement biaisé(e)s dans le premier état et dans la deuxième région 14, des cellules (autrement dit des bits) fortement biaisé(e)s dans le deuxième état.

Si l'on suit l'exemple de réalisation particulier de procédé illustré sur la figure 2, on a mis en évidence, dans la deuxième région 14, certaines cellules notées « HBB1 » et qui, malgré la première initialisation biaisée à '0' (étape E_{IC0}) et une plus forte probabilité de s'initialiser à '0', se sont établies à un état logique '1'.

On a également mis en évidence, dans la première région 12, certaines cellules notées « HBBO » et qui, malgré la deuxième initialisation biaisée à '1' (étape E_{IC1}) et une plus forte probabilité de s'initialiser à '1', se sont établies à un état logique '0'.

La phase Φ₁ de mise en évidence de cellules (autrement dit de bits) fortement biaisé(e)s remplace une phase d'enrôlement conventionnelle et telle que mise en oeuvre dans des procédés suivant l'art antérieur pour générer une clé cryptographique à partir d'une mémoire SRAM et en particulier d'une région de PUF de cette mémoire.

Elle présente pour avantage notamment de comporter un nombre d'étapes réduit (E_{ICO}, E_{STO} et E_{IC1}) beaucoup plus faible qu'une phase d'enrôlement conventionnelle et selon une séquence qui n'a pas nécessairement besoin d'être réitérée. Cela permet d'opérer un gain considérable en termes de consommation, de ressources nécessaires (que ce soit du point de vue du temps de traitement et des tailles de zones mémoires allouées) et de sécurisation des données.

Une fois la séquence d'initialisations biaisées et la phase Φ₁ de mise en évidence des bits fortement biaisés achevée, on effectue une phase Φ₂ dite de « post-traitement », où l'on construit itérativement une clé numérique destinée à former la clef d'encryptage ou à partir de laquelle la clef d'encryptage est apte à être formée.

L'établissement d'une telle clé numérique comprend des étapes de recherche, dans la deuxième région 14, des bits fortement biaisés dans le premier état et d'identification leurs positionnements respectifs, et de recherche dans la première région 12, des bits fortement biaisés dans le deuxième état et d'identification de leurs positionnements respectifs.

Ainsi, si l'on se réfère à l'exemple de séquence d'initialisation donné précédemment avec une initialisation biaisée à '0' suivie d'une initialisation biaisée à '1', durant la phase Φ₂ de post-traitement, on établit la clé numérique à partir des positions de bits « HBB1 » (autrement dit de cellules) fortement biaisé(e)s à '1' dans la deuxième région 14 et de positions de bits « HBBO » (autrement dit de cellules) fortement biaisé(e)s à '0' dans la première région 12.

Une telle recherche dans les régions 12 et 14 de la zone mémoire 10 est représentée de manière schématique sur la figure 4.

Par exemple, on peut prévoirque la détection de la présence d'une cellule fortement biaisée dans une i^{ème} ligne (autrement dit « rangée horizontale ») de la première région 12 ou de la deuxième région 14 et situé à une k^{ème} position dans cette ligne i^{ème} ligne (i.e. la k^{ème} colonne ou rangée verticale) peut entraîner une modification d'un bit situé à un emplacement, en particulier situé à une k^{ème} position d'au moins une ligne mémoire Lclé auxiliaire de « post-traitement » à partir de laquelle la clé numérique est formée. Cette ligne mémoire Lclé est en particulier une ligne mémoire de la sous-région 141 auxiliaire, dédiée aux calculs de post-traitement.

Ainsi, dans un exemple de réalisation particulier illustré sur la figure 2, lorsqu'on détecte, dans une i^{-ème} ligne Li, des bits fortement biaisés HBB dans la région 12 ou la région 14, et l'on identifie leurs positions P1_HBB, P2_HBB (i.e. une rangée horizontale), on peut effectuer alors une modification de bits dans la clé numérique à des emplacements correspondants Em1, Em2, en termes de positionnement ou de rang dans cette clé numérique. Dans l'exemple de réalisation particulier illustré lorsqu'on détecte des bits fortement biaisés à '1' respectivement en 3^{ème} colonne (ou rang) et en 7^{ème} colonne (ou rang), on modifie (ici on écrit un '1') les bits du 3^{ème} rang (ou colonne) et du 7^{ème} (rang ou colonne) de la ligne Lclé formant la clé numérique.

Typiquement, la phase Φ₂ de post-traitement comprend un traitement répété, ligne par ligne, comprenant des étapes consistant à :
a) rechercher si figure au moins une cellule fortement biaisée à l'état '1' dans une i^{ème} ligne de la deuxième région 14 et le cas échéant identifier la position dite « première position » de cette cellule dans la i^{ème} ligne de la deuxième région 14,
b) rechercher si figure au moins une cellule fortement biaisée à l'état '0' dans une i^{ème} ligne de la première région 12 et le cas échéant identifier la position dite « deuxième position » de cette cellule fortement biaisé à l'état '0' dans cette i^{ème} ligne de la première région 12.

L'étape a) peut être suivie, lorsqu'une cellule fortement biaisée à l'état '1' a été détectée, d'une étape consistant à mettre à jour ou modifier, en particulier mettre à l'état '1', un bit de la clé numérique situé à un premier emplacement. Ce premier emplacement dans la clé numérique dépend de celui de la première position identifiée dans la i^{ème} ligne. Ainsi, si la cellule fortement biaisée à l'état '1' est en k^{ème} position ou située à un k^{ième} rang de la i^{ème} ligne, le bit susceptible d'être modifié est déterminé en fonction de cette k^{ème} position et peut être en particulier placé au k^{ème} rang de la clé numérique ou de la ligne auxiliaire de post-traitement Lclé dans laquelle cette clé numérique est formée.

La modification éventuelle du premier emplacement peut être conditionnée par le fait que ce premier emplacement n'a pas déjà été modifié lors du traitement d'une ligne précédente Lᵢ₋₁ ou i-1^{ème} ligne.

Ainsi, préalablement à une éventuelle étape de modification du premier emplacement, le procédé peut comprendre une étape de vérification si le premier emplacement de la clé numérique a déjà été modifié préalablement. Lorsqu'aucune modification préalable n'a été mise en oeuvre, la modification ou mise à jour du bit au premier emplacement peut être alors effectuée. Pour opérer une telle vérification, la sous-région auxiliaire 141 peut être par exemple dotée d'une ou plusieurs lignes auxiliaires de post-traitement spécifiques pour répertorier chaque emplacement de bits déjà modifiés dans la clé numérique.

De même, l'étape b) peut être suivie, lorsque la deuxième cellule fortement biaisée a été détectée, d'une étape consistant à modifier, en particulier mettre dans le premier état, au moins un deuxième bit de la clé numérique à un deuxième emplacement dans la ligne mémoire Lᵢ ou i^{ème} ligne.

La modification éventuelle du deuxième emplacement peut être conditionnée par le fait que ce deuxième emplacement n'a pas été déjà modifié lors du traitement d'une ligne précédente Lᵢ₋₁ ou i-1^{ème} ligne.

Ainsi, préalablement à une étape éventuelle de modification du deuxième emplacement, le procédé peut comprendre une étape de vérification pour déterminer si le deuxième emplacement dans la clé numérique a été modifié préalablement. Lorsqu'aucune modification préalable n'a été mise en oeuvre, la modification du deuxième emplacement peut être alors effectuée.

Si l'on se réfère à l'exemple particulier de procédé illustré sur la figure 2, la phase Φ₂ dite de « post-traitement » contient elle-même une séquence de deux sous-phases ϕpp1, ϕpp0 pour traiter une i^{ème} ligne, cette séquence étant répétée pour autant de lignes nécessaires à la constitution de la clé.

Durant une première sous-phase ϕ_{PP1}, dite de post-traitement de bits biaisés à 1, on détecte tout d'abord (étape E_{D1}) la présence éventuelle de bits HBB1 fortement biaisés à '1' sur la ligne i^{ème} ligne Lᵢ de la première région 12 et le cas échéant on identifie leurs positions respectives.

On vérifie ensuite (étape Eᵥ₁) si des emplacements correspondants à ces positions respectives dans la clé numérique ont été déjà été modifiés. Si tel n'est pas le cas, une modification (étape E_{mod1}) de la clé numérique est réalisée auxdits emplacements correspondants en écrivant la valeur des bits fortement biaisés, ici typiquement une valeur logique de '1' pour des bits HBB1 fortement biaisés à '1'.

Dans le cas contraire, si les emplacements correspondants de la clé numérique ont déjà été modifiés, aucune modification de la clé numérique n'est opérée et on passe à la deuxième sous phase ϕ_{PPP0}.

Dans un cas où, durant la première sous-phase ϕ_{PP1}, aucun bit HBB1 fortement biaisé à '1' n'est détecté sur la i^{ème} ligne Lᵢ, on passe également à la deuxième sous phase ϕ_{PPP0}.

Durant la deuxième sous-phase ϕ_{PP0}, dite de post-traitement de bits biaisés à '0', on détecte tout d'abord (étape E_{D0}) la présence éventuelle de bits HBBO fortement biaisés à '0' sur la ligne i^{ème} ligne Lᵢ de la deuxième région 14.

S'il y a un ou plusieurs bits HBBO autrement dit, fortement biaisés à '0', on identifie leurs positions respectives puis on vérifie (étape Evo) si les emplacements correspondants dans la clé numérique ont été déjà été modifiés.

Si ce n'est pas le cas, une modification (étape E_{mod0}) de la clé numérique est réalisée auxdits emplacements correspondants en écrivant la valeur des bits fortement biaisés, ici typiquement une valeur logique de '0' pour des bits HBBO fortement biaisés à 0.

On passe alors ensuite à la ligne suivante Lᵢ₊₁ (étape Li++)

Dans un cas où, durant la deuxième sous-phase ϕ_{PP0}, aucun bit HBBO, autrement dit, fortement biaisé à '0' n'est détecté sur la i^{ème} ligne Lᵢ, on passe également à la ligne suivante Lᵢ₊₁ (étape Lᵢ++).

On réitère la même procédure ligne par ligne.

La clé numérique que l'on constitue itérativement peut être formée de N-bits. La répétition de la séquence des deux sous-phases ϕ_{PP1}, ϕ_{PP0} peut être stoppée dès lors qu'on a complété et écrit au moins une fois, dans chacun des N bits constitutifs de la clé cryptographique.

La clé numérique que l'on a constituée itérativement peut être destinée à être utilisée directement comme clé cryptographique ou bien servir de base à la génération d'une clé cryptographique, éventuellement avec un nombre de bits différents, après avoir subi un ou plusieurs traitements, en particulier une ou plusieurs opérations logiques.

Le nombre m de lignes de la première région 12 est ici de préférence dimensionné par conception pour permettre, même dans des cas extrêmes de vieillissement de la mémoire et de températures élevées, que l'on dispose d'au moins N bits fortement biaisés à l'issue de la phase Φ₁ de mise en évidence des bits fortement biaisés.

Toutefois, le procédé d'implémentation de la clé cryptographique peut s'achever et la clé cryptographique peut être déterminée à l'issue d'un nombre de répétions de la séquence des deux sous-phases ϕ_{PP1}, ϕ_{PP0} inférieur à m, les calculs dans la m/2^{ème} ligne ou avant si on se trouve dans des conditions de fonctionnement plus optimales que prévues.

Dans l'exemple de réalisation décrit précédemment en lien avec la figure 2, on met en évidence des bits (ou cellules) fortement biaisées à '0' dans la première région 12 et des bits (ou cellules) fortement biaisés à '1' dans la deuxième région 14.

En alternative de la première phase Φ₁ de mise en évidence des bits fortement biaisés, il est toutefois possible de réaliser tout d'abord l'initialisation biaisée à '1' de la première région 12 (étape E_{IC1}), puis dupliquer les valeurs d'initialisation dans la deuxième région 14 (étape E_{STO}), puis effectuer l'initialisation biaisée à '0' (étape E_{IC0}) dans la première région 12.

Dans ce cas, on détecte alors ensuite, durant la phase Φ₂ de post-traitement des bits (ou cellules) fortement biaisées à '1' dans la première région 12 et des bits (ou cellules) fortement biaisés à '0' dans la deuxième région 14.

De même, l'ordre des étapes ou sous-phases ϕpp1, ϕ_{PP0} lors de la phase Φ₂ de post-traitement peut être également inversé par rapport à celui décrit précédemment en liaison avec la figure 2.

Ainsi, on peut d'abord effectuer la sous-phase ϕ_{PP0} pour traiter une i^{ème} ligne de la région 12 ou 14 contenant les bits fortement biaisés à '0' afin d'identifier le positionnement des bits fortement biaisés à '0' et modifier en conséquence un emplacement dédié de la clé numérique en fonction de ce positionnement, puis effectuer la sous-phase ϕ_{PP1} pour traiter une i^{ème} ligne de l'autre région 14 ou 12 contenant les bits fortement biaisés à '1' afin d'identifier le positionnement des bits fortement biaisés à '1' dans cette i^{ème} ligne et modifier en conséquence, typiquement en écrivant un '1' à un autre emplacement dédié à la clé numérique en fonction de ce positionnement.

Même si, comme décrit précédemment, un ordre inverse de certaines étapes des phases Φ₁, Φ₂ peut être prévu, on conserve toutefois de préférence le même ordre d'étapes tout au long de la durée de vie ou d'utilisation de la mémoire SRAM, afin de pouvoir générer à chaque fois une même clé cryptographique.

Durant la phase Φ₂ de post-traitement décrite précédemment, les étapes consistant à identifier les bits fortement biaisés peuvent être réalisés par exemple à l'aide d'une suite d'opérations logiques telles que des opérations logiques élémentaires OR, AND et XOR.

Selon un mode de réalisation particulier, on peut paramétrer les étapes d'initialisation biaisée au premier état et d'initialisation biaisée au deuxième état, de sorte que la probabilité d'initialisation, au deuxième état, de cellules ayant été initialisées par initialisation biaisée au premier état, soit différente de la probabilité d'initialisation, au premier état, des mêmes cellules ayant été initialisées par initialisation biaisée au deuxième état.

Ainsi, on peut paramétrer respectivement l'initialisation biaisée à '1' (étape E_{CO1}) et l'initialisation biaisée à '0' (étape E_{CO0}) pour que, consécutivement à l'initialisation biaisée à '1', la probabilité de trouver des bits fortement biaisés à '0' HBBO soit différente de la probabilité, consécutive à l'initialisation biaisée à '0' de trouver des bits fortement biaisés à '1' HBB1. En faisant cela, on peut ainsi moduler le pourcentage de '0' et de '1' que l'on retrouvera dans la clé cryptographique. Cela permet de diversifier la réponse qu'une même zone PUF peut donner.

Durant la phase de post-traitement Φ₂, on peut utiliser, et réaliser des opérations sur d'autres lignes (ou bits ou emplacements) que Lclé (destin(é)e à former la clé cryptographique elle-même).

Ainsi, par exemple, une deuxième ligne de la sous-région auxiliaire 141 peut être prévue par exemple pour permettre un suivi de bits déjà modifiés de la première ligne auxiliaire de post traitement au cours de la phase Φ₂ de post-traitement consécutivement à une détection de bit fortement biaisé à '0'. Une troisième ligne de la sous-région auxiliaire 141 peut être prévue par exemple pour permettre un suivi de bits déjà modifiés de la première ligne auxiliaire de post traitement au cours de la phase Φ₂ de post-traitement consécutivement à une détection de bit fortement biaisé à '1'. Une ligne supplémentaire peut être quant à elle être utilisée pour réaliser une écriture masquée dans la ou les lignes auxiliaires de post traitement Lclé formant la clé numérique.

Un procédé tel que décrit précédemment peut comprendre, préalablement à la phase Φ₁ de mise en évidence des HBB, une phase Φ₀ des étapes supplémentaires notamment de définition de certains paramètres préalablement à celles d'initialisations biaisées de la zone mémoire 10.

Ainsi, dans l'exemple de réalisation illustré sur la figure 2, préalablement à la première phase Φ₁, le procédé comprend une phase Φ₀ lors de laquelle une étape E_{CAL} de conception de la première région 12 contenant une fonction physique non-clonable.

Une telle étape peut comprendre en particulier le paramétrage des conditions d'initialisation de cette première région 12 et en particulier des moyens de commande d'initialisation associés à cette première région 12 afin de définir la probabilité d'établissement à '0' ou à '1' des cellules de la première région 12 et/ou un pourcentage spécifique de bits fortement biaisés à '0' ou à '1'.

Les paramètres réglant les conditions d'initialisation biaisée de la première région 12 peuvent être adaptés en fonction du noeud technologique employé pour fabriquer la mémoire SRAM et d'une estimation de sa durée de vie, et en utilisant un abaque lié aux caractéristiques physiques du circuit, en particulier de vieillissement et de température de fonctionnement.

Une telle conception peut également comprendre une étape de dimensionnement de la première région 12 visant notamment à déterminer le nombre m de lignes utiles pour cette première région 12.

Le phase Φ₀ du procédé peut également comprendre également une étape E_{IADR} d'initialisation d'adresses intermédiaires, et en particulier d'initialisation de la deuxième région 14 ou d'au moins sa sous-région 141 auxiliaire de post-traitement. On établit alors les cellules mémoire de cette sous-région 141 « auxiliaire » en leur imposant toutes un même état logique donné, en particulier un état logique '0'.

Selon une variante de réalisation améliorée en matière de sécurité, on peut prévoir de dupliquer la clé numérique destinée à former la clé cryptographique ou à partir de laquelle la clé cryptographique est destinée à être formée à une autre adresse et prévoir ainsi d'établir en parallèle une deuxième clé numérique. Cette deuxième clé est destinée, tout comme la première clé à être formée de manière incrémentale par exemple d'une manière telle que décrite précédemment. La clé numérique et la deuxième clé sont de préférence modifiées simultanément consécutivement à la détection d'un bit fortement biaisé.

Dans ce cas, on peut également prévoir, avant une éventuelle étape de modification de la clé numérique et de la deuxième clé faisant suite à la détection d'un bit hautement biaisé, une étape de vérification de l'identité de la clé numérique et de la deuxième clé. Dans le cas où consécutivement à cette étape de vérification, on détecte une différence entre ces deux clés, on peut alors procéder à un effacement de la zone mémoire 10 afin d'effacer le contenu des cellules de la première région 12 et de la deuxième région 14.

Un tel effacement peut être en particulier mis en oeuvre par une technique d'effacement rapide telle que décrite par exemple dans le document EP 3°496°101 et dans laquelle, notamment, on rend passant leurs transistors d'accès et on connecte entre elles les lignes de bits BLT et BLF auxquelles elles sont associées.

Ainsi dans l'exemple de réalisation particulier illustré sur la figure 6, on prévoit, outre des étapes semblables à celles de l'exemple de réalisation illustré sur la figure 2, des étapes supplémentaires E_{VER1} et E_{VER2} de vérification de l'identifié entre les deux clés. Une première étape de vérification E_{VER1} d'identité des clés numériques clé1 et clé2 est mise en oeuvre en particulier après détection d'un bit fortement biaisé à '1' et de sa position et avant une éventuelle modification de la première et deuxième clé consécutive à cette détection. Une deuxième étape de vérification E_{VER2} d'identité des clés numériques clé1 et clé2 peut être également mise en oeuvre en particulier après détection d'un bit fortement biaisé à '0' et de sa position et avant une éventuelle modification de la première et deuxième clé résultant de cette détection.

Dans un cas, où l'on détecte une différence entre les deux clés clé1 et clé2, on déclenche une étape d'effacement E_{eff} de la zone mémoire. Dans le cas contraire, où les clés numériques clé1 et clé2 sont bien identiques, on poursuit la séquence d'une manière telle que décrite précédemment.

Dans l'un ou l'autre des exemples de réalisation décrits précédemment, lorsque le pourcentage de bits HBBO fortement biaisés à '0' et lorsque le pourcentage de bits fortement biaisés à '1' HBB1 est similaire, on aboutit la plupart du temps, à la génération d'une clé dans laquelle on a 50% de '0' et un 50% de '1'.

On peut toutefois souhaiter s'éloigner de cette parité. Pour certaines applications, on peut également vouloir disposer de plusieurs clés différentes extraites de la même zone 10 de mémoire SRAM et en particulier de la région 12 de PUF.

Pour cela, une variante de réalisation du procédé intègre au moins une étape de comparaison d'une proportion de '1' ou de '0' dans la clé numérique en cours d'élaboration avec un seuil prédéterminé.

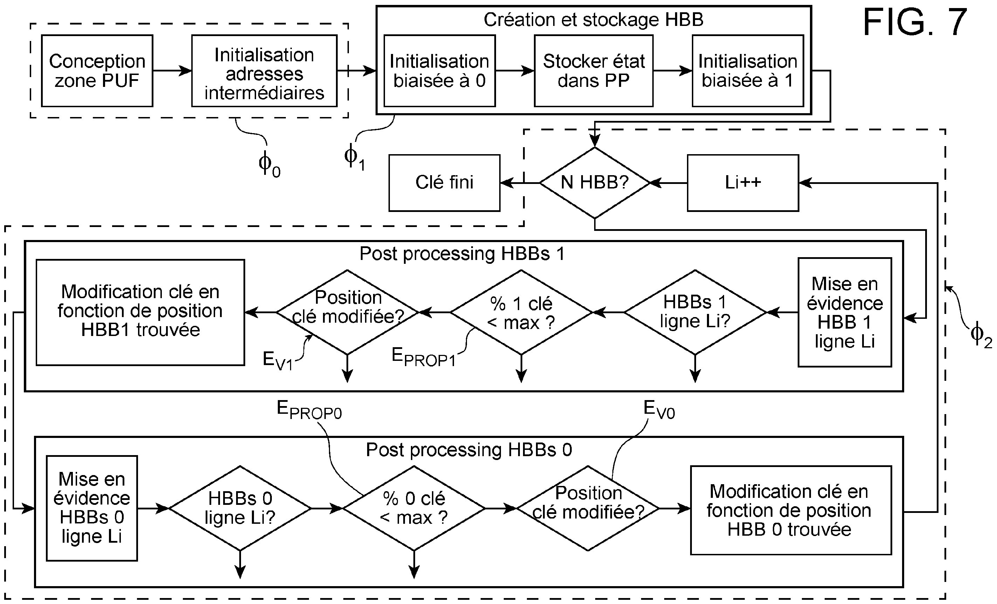

Ainsi, dans l'exemple de réalisation illustré sur la figure 7, après l'étape E_{D1} de recherche de cellule(s) fortement biaisée(s) à '1' sur la i^{ème} ligne Lᵢ et d'identification de la position de cette ou ces cellule(s) et préalablement à une éventuelle modification d'au moins un bit de la clé numérique, on prévoit une étape de vérification E_{PROP1} de la proportion de '1' dans la clé numérique en cours d'élaboration. Cette étape de vérification E_{PROP1} comprend typiquement la comparaison de cette proportion à un seuil max1. Lorsque ce seuil max1 est dépassé, on passe à la deuxième sous-phase ϕ_{PPP0}. En revanche, tant que ce seuil max1 n'est pas dépassé, la clé numérique est susceptible d'être modifiée en lui mettant ici des bits à la valeur logique '1'.

De même, après l'étape E_{D1} de recherche de cellule(s) fortement biaisée(s) à '0' sur la i^{ème} ligne Lᵢ et d'identification de la position de cette ou ces cellule(s) et préalablement à une éventuelle modification d'un autre bit de la clé numérique, on prévoit une étape de vérification E_{PROP0} de la proportion de '0' dans la clé numérique en cours d'élaboration. Cette étape de vérification E_{PROP0} comprend typiquement la comparaison de cette proportion à un seuil max0. Lorsque ce seuil max0 est dépassé, on passe à une ligne suivante. En revanche, tant que ce seuil max0 n'est pas dépassé, la clé numérique est susceptible d'être modifiée en lui mettant ici des bits à la valeur logique '0'.

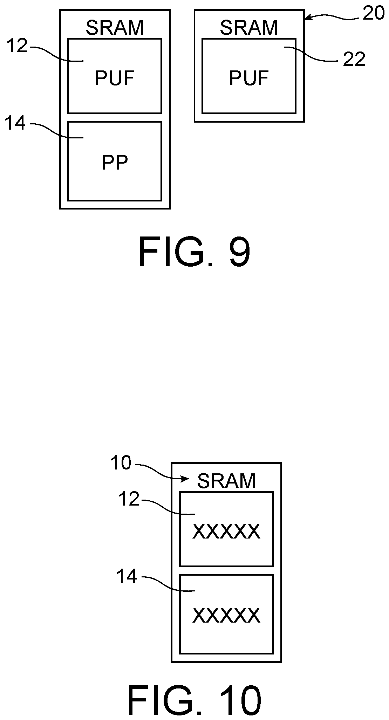

Lorsque la première région 12 SRAM dont on dispose a de par sa conception (i.e. design) initial(e) une taille insuffisante il peut arriver que cette région 12 ne permette pas d'établir l'intégralité de N-bits de la clé numérique. Ainsi, on peut éventuellement rencontrer un cas de figure dans lequel on dispose d'un nombre inférieur à N cellules HBB nécessaires pour former la clé numérique de N-bits. Il peut également arriver que certaines cellules HBB identifiées soient dans des positions identiques en termes de colonne ou de rang si bien que le nombre de bits HBB susceptibles de pouvoir entraîner une modification de la clé reste toujours insuffisant. Dans ce cas à la place d'une seule partition de mémoire SRAM ou d'une seule mémoire, on peut souhaiter disposer d'une partition supplémentaire. Ainsi, selon une variante de réalisation illustrée sur la figure 9 une troisième région 22 appartenant ici à une mémoire SRAM 20 peut être utilisée en renfort. Cette troisième région 22 est également typiquement dédiée à réaliser une fonction physique non clonable (PUF).

Ainsi, lorsque l'établissement de la clé numérique de N-bits est effectué par traitement ligne par ligne et que l'ensemble des lignes de la première région 12 a déjà été traité sans que tous les N-bits de la clé numérique n'aient été mis à jour ou constitués, le procédé peut comprend en outre, lors dudit établissement de la clé numérique de N-bits, des étapes supplémentaires consistant :
- effectuer une nouvelle initialisation biaisée, de l'ensemble de cellules de la troisième région 22 de sorte à favoriser l'établissement dans un premier état logique, les cellules de la troisième région 22,
- stocker, en particulier dans la deuxième région 14, les états respectifs des cellules de la troisième région 22 et résultant de la nouvelle initialisation biaisée, puis,
- effectuer une autre nouvelle initialisation biaisée de la troisième région 22 et de sorte à favoriser une mise dans un deuxième état logique, complémentaire dudit premier état logique, les cellules de la troisième région 22.

On complète ensuite la clé numérique à partir des positions des cellules hautement biaisées au deuxième état et hautement biaisée au premier état identifiées et qui résultent de ces nouvelles initialisations biaisées.

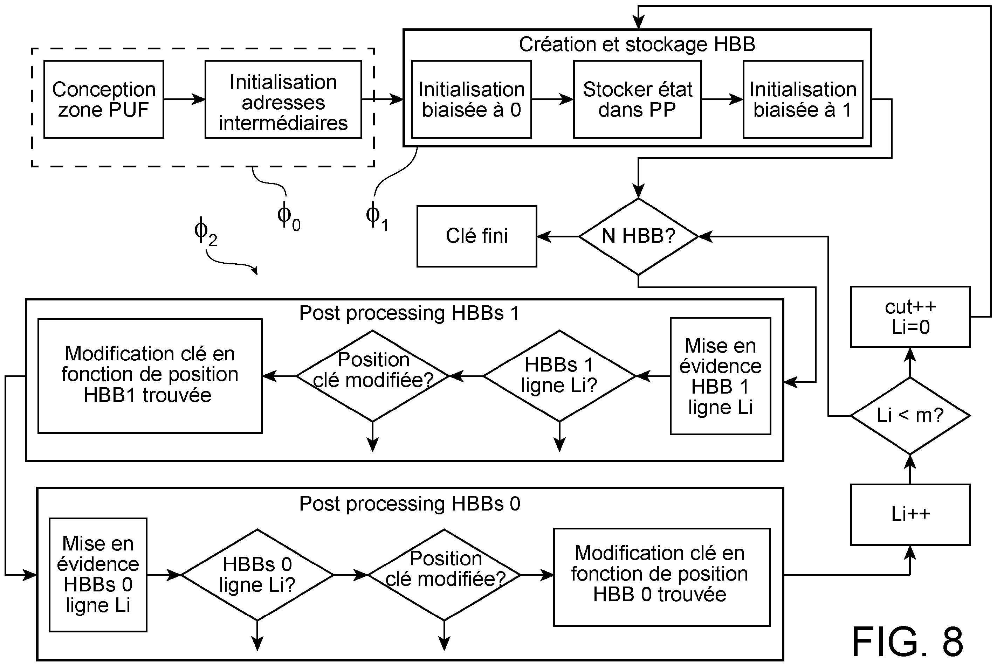

Ainsi, dans l'exemple particulier de procédé illustré sur la figure 8, une étape consistant à comparer le nombre de lignes déjà traité avec le nombre m total de la première région 12 est prévue. Lorsque ce nombre est atteint, on passe à la troisième région 22. On effectue une initialisation biaisée à '0' et une initialisation biaisée à '1' pour mettre en évidence les cellules ou bits hautement biaisées dans cette troisième région 22. On répète ainsi un enchaînement tel que décrit précédemment.

Dans un cas particulier où l'on souhaite former une clef de N-bits, avec N supérieur à la taille de chaque ligne mémoire, autrement dit supérieur au nombre de colonnes de la mémoire SRAM, on peut prévoir par exemple de réitérer plusieurs fois une même procédure et en particulier une procédure du type de celle décrite précédemment pour pouvoir générer à chaque fois un sous-mot constitutif de la clef.

Après mise sous tension de la mémoire SRAM et lors de phases de fonctionnement de la mémoire SRAM hormis celle(s) où l'on génère une clé cryptographique, on peut avantageusement prévoir de placer au moins les cellules mémoire de la première région 12 dans un état de fonctionnement particulier dit « métastable », afin d'empêcher un vieillissement. Celles de la deuxième région 14 de la SRAM peuvent être éventuellement mises dans un état métastable pour empêcher l'attaque par rémanence des états.

La figure 10 sert à illustrer de manière schématique un tel mode de fonctionnement, déclenché après mise sous tension de la mémoire, afin notamment de se prémunir d'effets néfastes liés au NBTI (NBTI en anglais « Negative-Bias Température Instability », c'est à dire d' « Instabilité de température en polarisation négative »). En mettant les cellules dédiées aux PUF en état métastable on évite ainsi une dérive de leurs états respectifs d'initialisation, évitant donc de fausser la valeur de la clé cryptographique.

Une méthode pour placer les cellules de la première région 12 et 14 dans l'état métastable telle que décrite dans la demande FR N°2214117 déposée le 21/12/2022 auprès de l'INPI et peut être par exemple utilisée.

Le placement dans un état métastable des cellules de la première région 12 et de la deuxième région 14 peut ainsi consister à les mettre dans un état indéterminé pour lequel leur premier noeud de stockage et leur deuxième noeud de stockage respectifs sont à des potentiels égaux ou sensiblement égaux, par exemple en connectant entre elles les lignes de bits ou en connectant entre eux les noeuds de stockage complémentaires de chaque cellule.

Tandis que les régions 12 et 14 sont mises dans l'état métastable d'autres cellules de la mémoire SRAM appartenant à une partie distincte de la zone 10 et en particulier des première et deuxième régions 12 et 14 peuvent être dans le même temps placées dans un état déterminé pour lequel leurs premier noeud et deuxième noeud respectifs sont à des potentiels respectifs différents entre un état bas, correspondant en particulier à un état logique donné '0', et un état haut, correspondant à un état logique complémentaire '1'.

Des étapes d'un procédé tel que décrit précédemment peuvent être implémentées de plusieurs manières. Une implémentation de type « hardware » prévoit que l'enchainement des étapes soit réalisé à l'aide d'une machine d'états, (FSM en anglais pour « Finite State Machine ») codée dans au moins un circuit électronique et/ou un processeur éventuellement situé sur un même support de puce que la mémoire SRAM. Un tel type d'implémentation est plus sécurisé et optimisé en temps d'exécution et de consommation d'énergie.

Il est également possible de réaliser le procédé en utilisant une implémentation de type « software » dans laquelle un programme externe, logé dans un dispositif (ordinateur, processeur,...) distant envoie à la mémoire SRAM instruction par instruction pour réaliser les différentes étapes. Un tel mode de réalisation présente plus de flexibilité pour paramétrer les différentes étapes et/ou apporter des modifications mais a typiquement un temps d'exécution qui peut s'avérer plus long.

De même, des paramètres d'entrée du procédé tels que par exemple, les paramètres qui permettent d'ajuster les probabilité d'initialisation à '1' ou à '0' par initialisation biaisée, le découpage de ces régions peuvent être sous forme de données stockées dans des registres de configuration.

Il est également possible d'intégrer ces paramètres sous forme d'instructions. Quand un processeur ou un ordinateur ou des moyens de traitement informatiques ou numériques envoi(en)t les instructions d'initialisation contrôlée, il(s) ajoutent alors un ou plusieurs champs d'informations contenant par exemple une valeur qui règle l'initialisation biaisée à '0' et l'initialisation biaisée à '1'. Les implémentations hardware et software sont combinables. On peut ainsi par exemple implémenter une machine d'états déclenchée par une instruction qui envoie tous les paramètres de caractérisation de l'initialisation biaisée ou un programme qui se déclenche par un registre de configuration et qui contiendrait également les paramètres des initialisations biaisées.

En variante de l'un ou l'autre des exemples de réalisation décrits précédemment, il est possible prévoir une deuxième région de taille m associée à un ou plusieurs registres externes à la mémoire et dans lesquels les calculs et/ou opérations pour mettre en oeuvre la clef sont implémentées. Dans ce cas, de tels registres sont de préférence également protégés par un mécanisme de type « effacement rapide ».

Un procédé selon l'un ou l'autre des exemples de réalisation décrits précédemment s'adapte particulièrement à l'encryptage rapide de systèmes électroniques et peut permettre de remplacer dans de tels systèmes un module de type TNRG (« true random number generator », « générateur de nombres aléatoires ») pour créer une ou plusieurs clés d'encryptage employés par un module de type AES (pour « Advanced Encryption Standard ») ou utilisant un autre algorithme de chiffrement.

## Revendications

1. Procédé pour la génération d'une clé cryptographique à partir d'une mémoire SRAM, comprenant des étapes consistant à :
- effectuer une première initialisation biaisée d'un premier ensemble de cellules situées dans au moins une première région (12) de ladite mémoire SRAM, en particulier une région dédiée à réaliser une fonction physique non clonable (PUF), de sorte à favoriser l'établissement dans un premier état logique, des cellules dudit premier ensemble,
- stocker dans un deuxième ensemble de cellules d'une deuxième région (14) de ladite mémoire, les états respectifs des cellules dudit premier ensemble et résultant de ladite première initialisation biaisée, puis,
- effectuer une deuxième initialisation biaisée dudit premier ensemble de cellules de sorte à favoriser une mise dans un deuxième état logique, complémentaire dudit premier état logique, lesdites cellules dudit premier ensemble,
le procédé comprenant en outre, après la première initialisation biaisée et la deuxième initialisation biaisée :
- établir une clé numérique de N-bits, à partir d'une ou plusieurs positions données identifiées dans ladite deuxième région (14) respectivement d'une ou plusieurs cellules dites « hautement biaisées au deuxième état » (HBB1 ; HBBO) qui appartiennent audit deuxième ensemble et se trouvent dans le deuxième état logique consécutivement à ladite première initialisation biaisée, et à partir d'une ou plusieurs autres positions identifiées dans ladite première région (12) respectivement d'une ou plusieurs cellules dites « hautement biaisées au premier état » (HBBO ; HBB1) qui appartiennent audit premier ensemble et qui se trouvent dans ledit premier état logique consécutivement à ladite deuxième initialisation biaisée, ladite clé numérique étant destinée à former la clé cryptographique ou formant un mot numérique à partir duquel la clef d'encryptage est destinée à être formée.

2. Procédé selon la revendication 1, dans lequel l'établissement de la clé numérique comprend des étapes de :
- recherche dans une i^{ème} ligne de la deuxième région (14) d'au moins une cellule hautement biaisée au deuxième état (HBB1 ; HBBO) et lorsqu'une cellule hautement biaisée au deuxième état (HBB1; HBBO) appelée « première cellule » est détectée, identification de la position, dite « première position », de ladite première cellule détectée,
- recherche dans une i^{ème} ligne de la première région (12) d'au moins une cellule hautement biaisée au premier état (HBBO ; HBB1) et lorsqu'une cellule hautement biaisée au deuxième état appelée « deuxième cellule » est détectée, identification de la position, dite « deuxième position », de ladite deuxième cellule détectée,
le procédé comprenant en outre,
- après identification de la première position de la première cellule : modification d'un bit donné situé à un premier emplacement (Em1) de la clé numérique, en particulier en mettant ledit bit donné dans le deuxième état, ledit premier emplacement de la clé numérique étant sélectionné en fonction de ladite première position (p1_HBB) identifiée,
et/ou,
- après identification de la deuxième position : modification d'un autre bit situé à un deuxième emplacement de la clé numérique, en particulier en mettant ledit autre bit dans le premier état, ledit deuxième emplacement de la clé numérique étant sélectionné en fonction de ladite deuxième position identifiée.

3. Procédé selon la revendication 2, dans lequel ladite première position identifiée correspond au k^{ème} rang de la i^{ème} ligne et dans lequel la clé numérique est formée dans une ligne dite « auxiliaire de post-traitement » de la mémoire SRAM, ledit premier emplacement étant déterminé dans la ligne auxiliaire de post-traitement en fonction de k, et en en particulier correspond au k^{ème} rang de ladite ligne auxiliaire de post-traitement.

4. Procédé selon l'une des revendications 2 à 3, comprenant en outre, après recherche et identification de ladite première position et avant modification dudit bit donné une étape de vérification par rapport à un premier seuil déterminé d'une proportion de bits au premier état dans la clé numérique et/ou, après recherche et identification de ladite deuxième position et avant modification dudit autre bit, une étape de vérification par rapport à un deuxième seuil déterminé d'une proportion de bits au deuxième état dans la clé numérique.

5. Procédé selon l'une des revendications 1 à 4, dans lequel la clé numérique est formée à partir d'une ligne auxiliaire de post-traitement de la mémoire ou dans au moins un registre d'un banc de registres auxiliaires, la mémoire étant dotée d'une ou plusieurs lignes auxiliaires de post-traitement supplémentaires ou d'un ou plusieurs registres auxiliaires supplémentaires pour répertorier, à chaque modification d'un bit de la clé numérique, un emplacement correspondant du bit modifié dans la clé numérique.

6. Procédé selon l'une des revendications précédentes, dans lequel ladite clé numérique est enregistrée à une première adresse mémoire ou dans un premier registre du système, externe à la mémoire, et est dupliquée sous forme d'une deuxième clé numérique à une seconde adresse mémoire ou dans un deuxième registre du système, externe à la mémoire, et dans lequel une modification d'un bit de la clé numérique est effectué simultanément dans la deuxième clé numérique, le procédé comprenant en outre des étapes consistant à :
- vérifier l'identité de la clé numérique et de la deuxième clé numérique et, lorsque la clé numérique et la deuxième clé numérique sont différentes,
- effacer le contenu de la première région (12) et de la deuxième région (14).

7. Procédé selon l'une des revendications 1 à 6, dans lequel l'établissement de la clé numérique de N-bits est effectué par traitement ligne par ligne et dans lequel lorsque l'ensemble des lignes de la première région (12) a déjà été traité sans que tous les N-bits de la clé numérique n'aient été mis à jour ou constitués, le procédé comprend en outre, lors dudit établissement de la clé numérique de N-bits, des étapes supplémentaires consistant à:
- effectuer une troisième initialisation biaisée, d'un troisième ensemble de cellules d'une troisième région appartenant à ladite mémoire SRAM ou à une autre mémoire SRAM de sorte à favoriser l'établissement dans un premier état logique, lesdites cellules dudit troisième ensemble de ladite troisième région,
- stocker les états respectifs des cellules dudit troisième ensemble et résultant de ladite troisième initialisation biaisée, puis,
- effectuer une initialisation biaisée dudit troisième ensemble de ladite troisième région (22) de sorte à favoriser une mise dans un deuxième état logique, complémentaire dudit premier état logique, lesdites cellules dudit troisième ensemble,
- compléter la clé numérique établie à partir des positions d'une ou plusieurs cellules dites « hautement biaisées au deuxième état » qui appartiennent audit troisième ensemble et se trouvent dans le deuxième état logique consécutivement à ladite troisième initialisation biaisée, et à partir des positions d'une ou plusieurs cellules dites « hautement biaisées au premier état » qui appartiennent audit troisième ensemble et se trouvent dans ledit premier état logique consécutivement à ladite quatrième initialisation biaisée.

8. Procédé selon l'une des revendications 2 à 6, dans lequel la clé numérique est constituée de N-bits dont les valeurs respectives dépendent chacune d'une position identifiée parmi lesdites positions données et lesdites autres positions identifiées de cellules hautement biaisées au premier état consécutivement à ladite deuxième initialisation biaisée et de cellules hautement biaisées au premier état consécutivement à ladite deuxième initialisation biaisée.

9. Procédé selon l'une des revendications précédentes, dans lequel la clé numérique est établie dans une sous-région dite « auxiliaire » de la mémoire SRAM, le procédé comprenant en outre, préalablement à la première initialisation biaisée et à la deuxième initialisation biaisée, au moins une étape d'initialisation de la sous-région « auxiliaire », de sorte à établir les cellules mémoire ou des bits des registres de la sous-région « auxiliaire » toutes à un même état logique donné, en particulier un état logique '0'.

10. Procédé selon l'une des revendications précédentes, dans lequel ladite première région (12) de la mémoire SRAM est accessible uniquement en lecture, ladite deuxième région (14) est accessible en lecture et en écriture.

11. Procédé selon l'une des revendications précédentes, dans lequel ladite première région (12) est formée de m lignes de cellules mémoire, ladite deuxième région (14) étant formée de m+k (avec m et k des entiers non-nuls) lignes de cellules mémoire ou de m lignes de cellules mémoire et est associée à un banc de registres de taille non inférieur à k.

12. Procédé selon l'une des revendications précédentes, dans lequel les cellules de la première région ont une probabilité donnée de s'établir dans un premier état logique consécutivement à la première initialisation biaisée, le procédé comprenant en outre, préalablement à ladite première initialisation biaisée, une étape de paramétrage de moyens de commande d'initialisation de la mémoire SRAM, de sorte à ajuster ladite probabilité donnée.

13. Procédé selon la revendication 12, dans lequel ladite probabilité donnée est modulée en fonction d'une durée d'impulsion sur au moins une ligne de mot couplée à des transistors d'accès des cellules dudit premier ensemble de cellules et appliquée lors de ladite première initialisation biaisée.

14. Procédé de commande d'une mémoire SRAM dans laquelle chacune des cellules est doté d'un premier noeud de stockage et d'un deuxième noeud de stockage comprenant des étapes de :
- mise sous tension de ladite mémoire SRAM ;
- mise en oeuvre d'un procédé pour générer une clé cryptographique selon l'une des revendications précédentes,
le procédé de commande comprenant en outre, entre ladite mise sous tension et ladite mise en oeuvre du procédé pour générer une clé cryptographique ou bien, après la mise en oeuvre dudit procédé pour générer une clé cryptographique,
des étapes consistant à :
- mettre les cellules de la première région et de la deuxième région dans un état indéterminé dit « métastable » pour lequel leur premier noeud de stockage et leur deuxième noeud de stockage respectifs sont mis à des potentiels égaux ou sensiblement égaux.

15. Dispositif comprenant :
- une mémoire SRAM,
- des moyens de commande de la mémoire SRAM configurés pour mettre en oeuvre un procédé selon l'une des revendication 1 à 13.
